# EUROPEAN PATENT APPLICATION

(11) **EP 2 548 745 A1**
(43) Date of publication of application: **23.01.2013**
(21) Application number: 11174465.2
(22) Date of filing: 19.07.2011
(51) Int. Cl.: B42F 9/00, F16B 2/10

(54) **Illuminating folder device**

(71) Applicant: Tai, Yung-Che, Taichung City 403 (TW)
(72) Inventor: Tai, Yung-Che, Taichung City 403 (TW)
(74) Representative: Zinkler, Franz

(57) **Abstract**

A illuminating folder device includes a folder body (10) having two panels (11, 12), a spine (13) interconnecting the panels, and an inner side (14) defined by the panels (11, 12) and the spine (13); a power supply (80, 30) mounted to the folder body (10); at least one clamp unit (50) having a fixed portion (51) fixed to the inner side (14), and a clamping portion (52) folded from and extending back over the fixed portion (51); a face sheet (40) disposed over the inner side (14) and clamped between the fixed and clamping portions (51, 52) ; and at least one lighting unit (60) connected to the power supply and disposed at the inner side (14) to emit light to the face sheet (40).

## Description

The invention relates to a folder device, more particularly to an illuminating folder device.

In commercial venues, such as restaurants, cafes, etc., information sheets, such as menus, ordering sheets, bills, etc., are usually clamped on a folder for positioning purposes and for providing conveniences to customers to read/view the contents of the information sheets, or to sign or write thereon. However, in some restaurants or cafes, because dim light is arranged in the premises in order to produce a romantic atmosphere, it is difficult for a customer to clearly see a menu or bill held by a folder handed by a waiter or to sign or write thereon.

An object of this invention is to provide an illuminating folder device that can illuminate the content in the folder device providing conveniences for a user to look or write.

Accordingly, an illuminating folder device according to this invention comprises: a folder body having first and second panels, a spine interconnecting the first and second panels, and an inner side defined by the first and second panels and the spine; a power supply mounted to the folder body; at least one clamp unit having a fixed portion fixed to the inner side, and a clamping portion folded from and extending back over the fixed portion; a face sheet disposed over the inner side and clamped between the fixed and clamping portions; and at least one lighting unit connected to the power supply and disposed at the inner side to emit light to the face sheet.

Other features and advantages of the present invention will become apparent in the following detailed description of the preferred embodiment with reference to the accompanying drawings, of which:
Figure 1 is an exploded perspective view of the first preferred embodiment of an illuminating folder device according to the present invention;
Figure 2 is another exploded perspective view of the first preferred embodiment;
Figure 3 is a perspective view of the first preferred embodiment in an assembled state;
Figure 4 is a fragmentary sectional view of the first preferred embodiment illustrating a clamp unit;
Figure 5 is another sectional view of the first preferred embodiment illustrating a power suppy;
Figure 6 is a sectional view taken along line VI-VI of Fig. 5;
Figure 7 is a sectional view taken along line VII-VII of Fig. 5;
Figure 8 is an exploded perspective view of the second preferred embodiment of an illuminating folder device according to the present invention;
Figure 9 is a perspective view of the second preferred embodiment in as assembled state; and
Figure 10 is a fragmentary sectional view taken along line X-X of Fig. 9.

Before the present invention is described in greater detail with reference to the accompanying preferred embodiment, it should be noted herein that like elements are denoted by the same reference numerals throughout the disclosure.

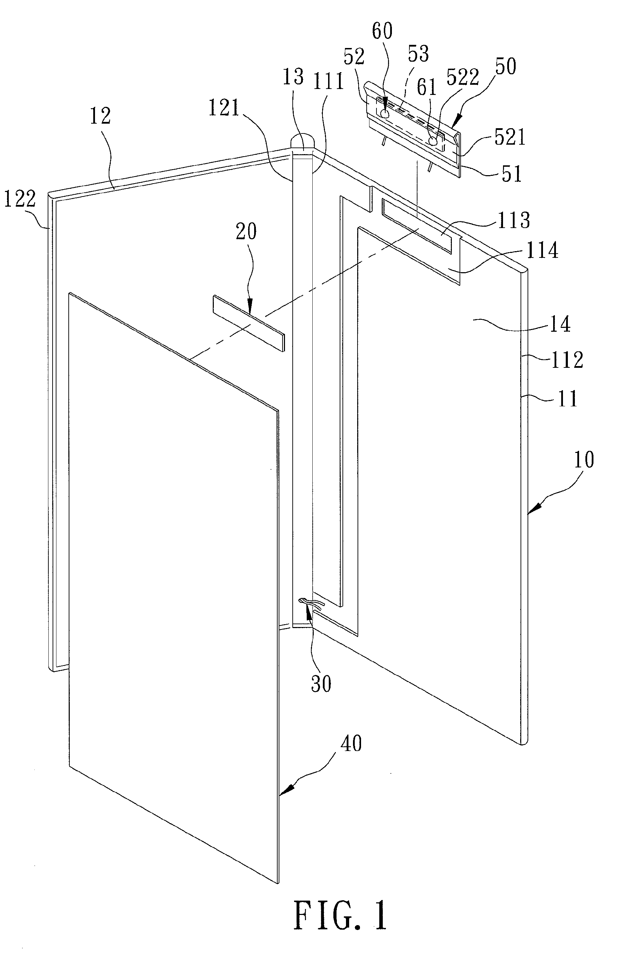

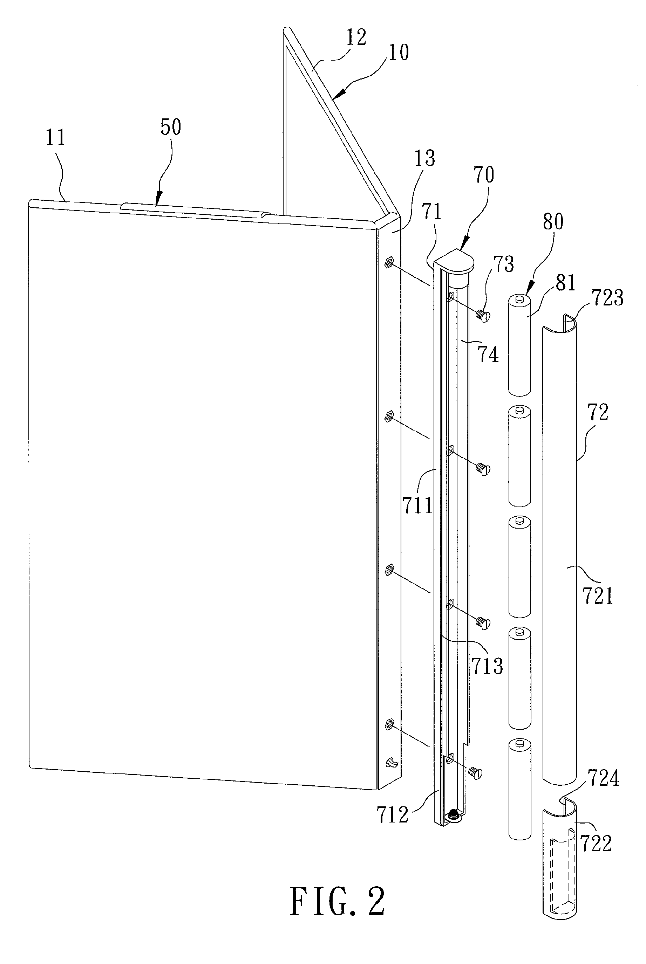

Referring to Figures 1, 2, 3 and 4, the first preferred embodiment of an illuminating folder device of this invention is shown to hold a bill 100 and includes a folder body 10, a magnet 20, a face sheet 40, a clamp unit 50, a lighting unit 60, and a power supply that is composed of a battery case 70, a battery unit 80 mounted in the battery case 70, and a conductor unit 30 connected electrically to the battery unit 80 and the lighting unit 60.

The folder body 10 has first and second panels 11, 12 that are movable to their folding or unfolding positions, a spine 13 interconnecting the first and second panels 11, 12, and an inner side 14 defined by the spine 13 and the first and second panels 11, 12. The first panel 11 has an inner lateral edge 111 proximate to the spine 13, and an outer lateral edge 112 distal from the spine 13. The inner side 14 is recessed to form a recessed surface region 114, and a cavity 113 formed in the recessed surface region 114. The recessed surface region 114 extends from the spine 13 to the outer lateral edge 112 of the first panel 11. The cavity 113 is formed in proximity to a top part of the outer lateral edge 112 and within the recessed surface region 114.

The second panel 12 has an inner lateral edge 121 proximate to the spine 13, and an outer lateral edge 122 distal from the spine 13.

The magnet 20 is fixed to the inner side 14 and received in the cavity 113.

The face sheet 40 is mounted fixedly to the inner side 14 and covers the magnet 20 and the conductor unit 30.

The clamp unit 50 has a fixed portion 51 fixed to the inner side 14, a clamping portion 52 folded from and extending back over the fixed portion 51, and a magnetically attractive element 53 disposed in the clamping portion 52. The fixed portion 51 is mounted in the recessed surface region 114 and between the face sheet 40 and the inner side 14 of the folder body 10. The clamping portion 52 is positioned to the face sheet 40, and has an envelope part 521 that encloses the magnetically attractive element 53 and has a plurality of holes 522. The magnetically attractive element 53 is attracted by the magnet 20 so as to be positioned to the face sheet 40.

The lighting unit 60 is disposed at the inner side 14, and is mounted on the clamping portion 52 of the clamp unit 50. The lighting unit 60 is coupled electrically to the conductor unit 30 for illuminating the face sheet 40. The lighting unit 60 includes a plurality of light-emitting elements 61 that are exposed from the respective holes 522 in the envelope part 521. In this embodiment, each light-emitting element 61 is a light-emitting diode.

The battery case 70 is attached to an outer side of the spine 13 for receiving the battery unit 80, and includes a base casing 71, a cover 72, and a plurality of fastening screws 73. A battery chamber 74 is defined by the base casing 71 and the cover 72. The base casing 71 is fixed to the spine 13 by the fastening screws 73, and includes a first portion 711, a second portion 712 and a slide groove 713 extending from the first portion 711 to the second portion 712. The cover 72 has a stationary portion 721 covering and interlocking with the first portion 711, and a movable portion 722 openably covering the second portion 712. The stationary portion 721 further has a pair of slide hooks 723 for engaging the respective slide grooves 723 of the first portion 711. The movable portion 722 further has a pair of slide rails 724 for sliding along the respective slide grooves 713 in the second portion 712.

The battery unit 80 includes a plurality of batteries 81 to be mounted in the battery chamber 74 of the battery case 70. The batteries 81 may be replaced or removed from the battery chamber 74 by detaching the movable portion 722 from the base casing 71.

The conductor unit 30 is disposed at the inner side 14 and positioned in the recessed surface region 114. The conductor unit 30 is connected electrically to the battery unit and the lighting unit 60, and extends in the recessed surface region 114 from the spine 13 to the clamping portion 52.

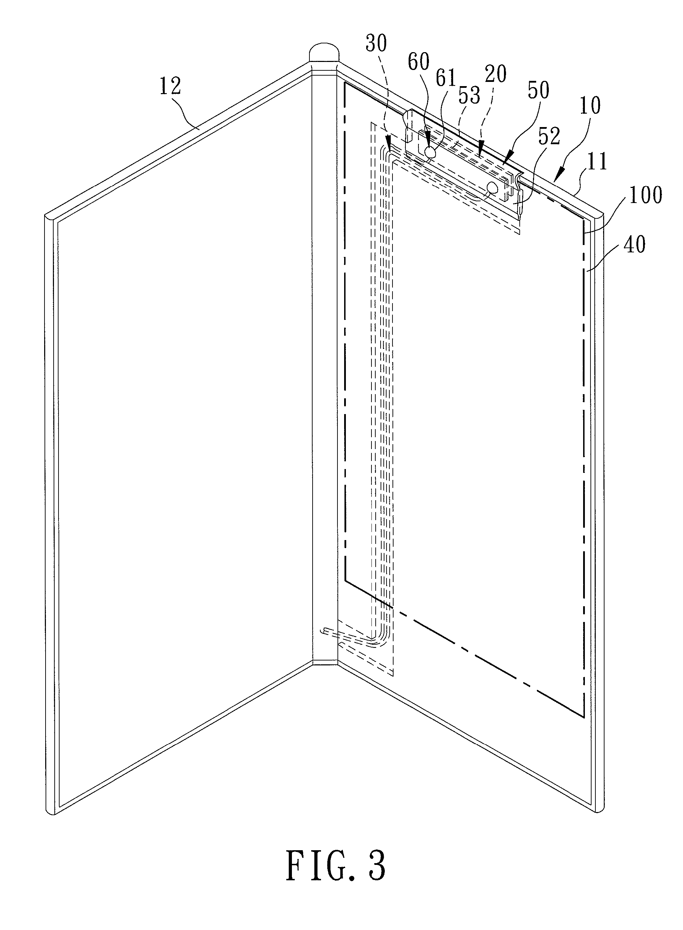

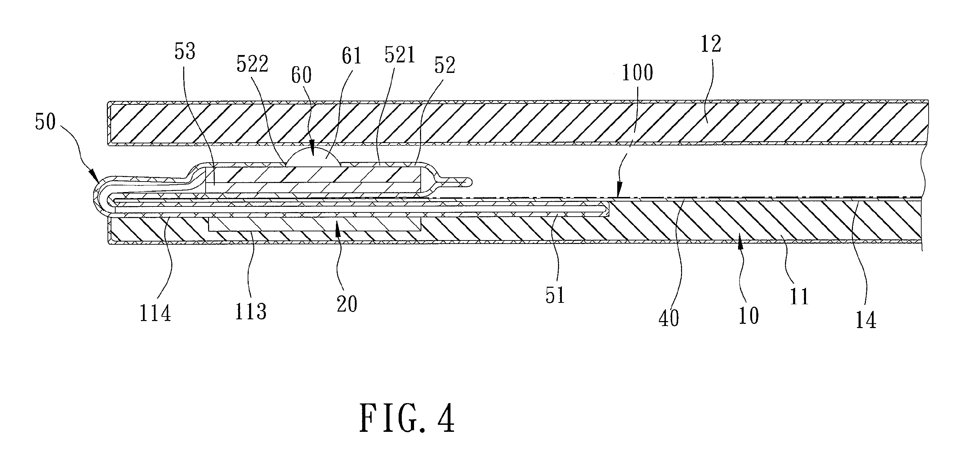

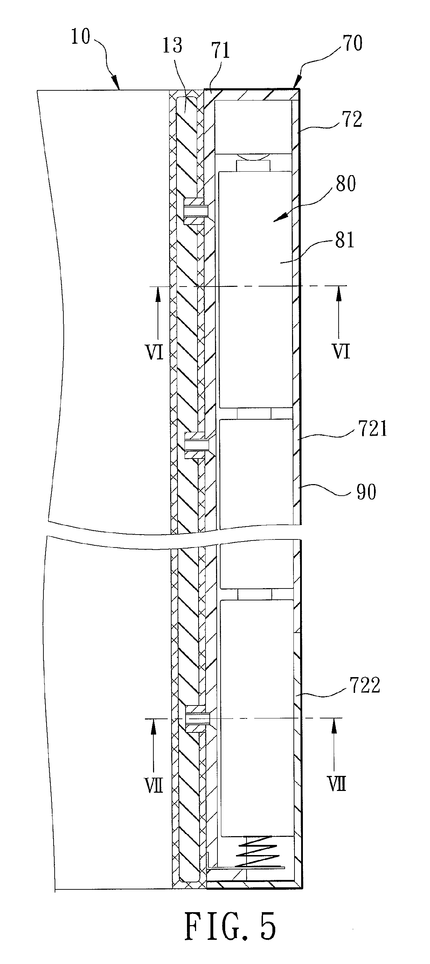

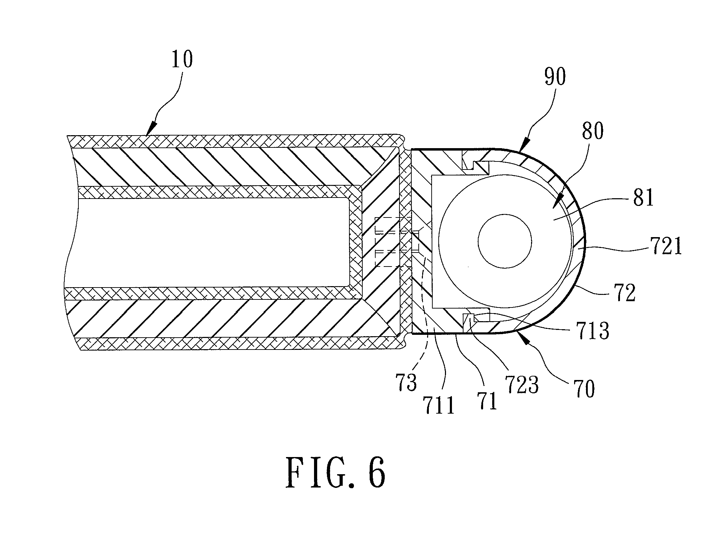

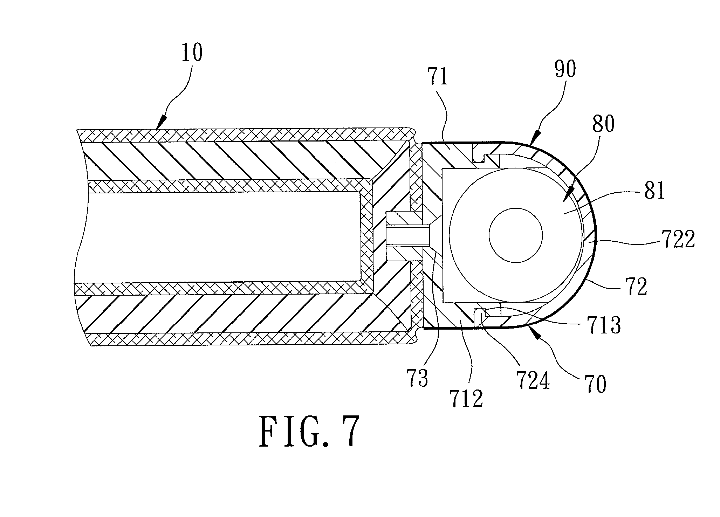

Referring once again to Figures 3 and 4, when the folder device is completely assembled, the face sheet 40 is mounted fixedly to the inner side 14 to cover the magnet 20 and the conductor unit 30. The fixed portion 51 of the clamp unit 50 is mounted fixedly between the first panel 11 and the face sheet 40. The clamping portion 52 of the clamp unit 50 is positioned to the face sheet 40 through an attraction of the magnetically attractive element 53 by the magnet 20. As such, when the first and second panels 11, 12 are unfolded, a top side of the bill 100 is clamped between the clamping portion 52 and the face sheet 40, as best shown in Figures 5, 6 and 7. Besides, by virtue of the power supplied by the battery unit 80, the lighting unit 60 mounted on the clamping portion 52 can emit light to enable a user to look or write on the folder device. When it is needed, the slide rails 724 of the movable portion 722 can be slid along the respective slide grooves 713 of the second portion 712 to remove or replace the batteries 81.

It is worth to mention that the surfaces of the base casing 71 and the cover 72 may be provided with a surface layer 90 that has a same material as the folder body 10 to hide the battery case 70 or decorate the folder device (see Figures 5, 6 and 7).

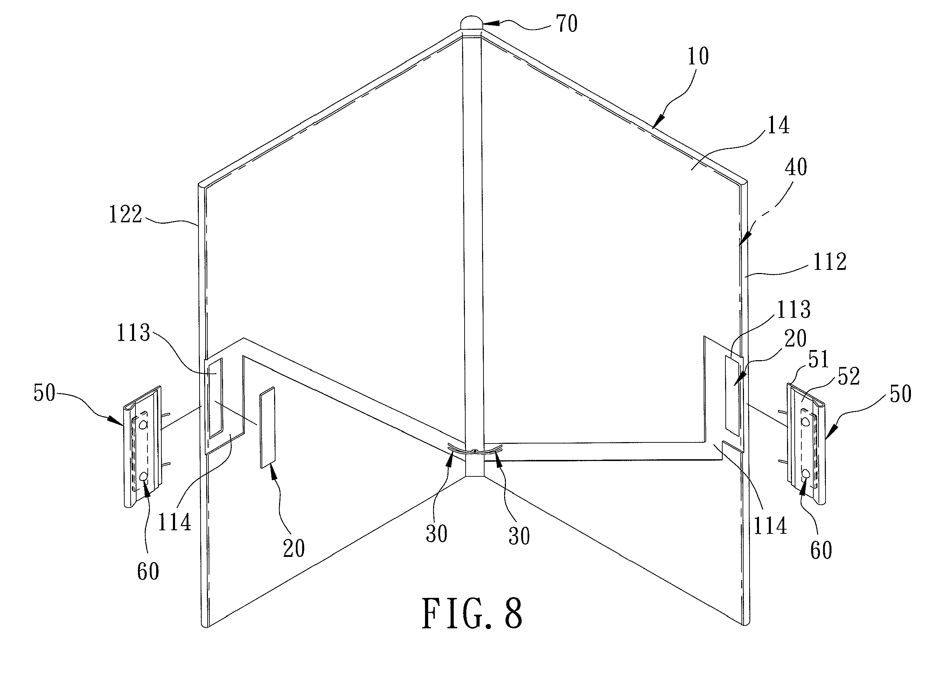

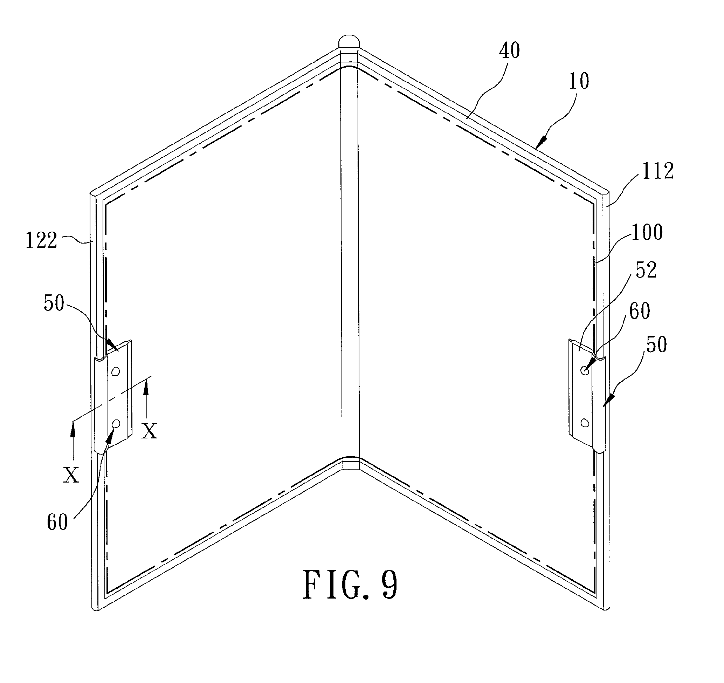

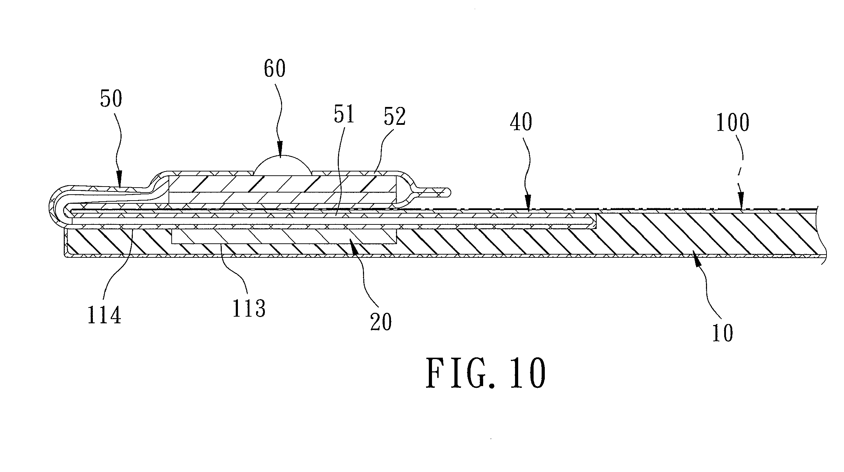

Referring to Figures 8, 9 and 10, the second preferred embodiment of this invention differs from the first preferred embodiment in having a pair of the magnets 20, a pair of conductor units 30, a pair of clamp units 50, and a pair of lighting units 60.

The inner side 14 of the folder body 10 is recessed to have two recessed surface regions 114 formed respectively in the first and second panels 11, 12, to receive the respective conductor units 30 and the respective clamp units 50. Two cavities 113 are formed respectively in the first and second panels 11, 12 to receive the respective magnets 20. The two cavities 113 are proximate to the outer lateral edges 112, 122 of the first and second panels 11, 12, respectively. Each recessed surface region 114 extends from the spine 13 to one of the outer lateral edges 112, 122 of the first and second panels 11, 12.

With the provision of the two clamp units 50 in proximity to the outer lateral edges 112, 122 of the first and second panels 11, 12, the menu 100 can be clamped firmly on the folder device. Moreover, the lighting units 60 mounted on the clamping portions 52 of the clamp units 50 can provide light to two opposite sides of the menu 100.

It is worth to mention that, the locations to dispose the lighting units 60 should not be limited only to the clamping portions 52 of the clamp units 50. The lighting units 60 may also be disposed directly on the inner side of the first or second panel 11, 12 or the spine 13.

## Claims

1. An illuminating folder device comprising:
a folder body (10) having first and second panels (11, 12), a spine (13) interconnecting said first and second panels (11, 12), and an inner side (14) defined by said first and second panels (11, 12) and said spine (13);
a power supply (80, 30) mounted to said folder body (10);
at least one clamp unit (50) having a fixed portion (51) fixed to said inner side (14), and a clamping portion (52) folded from and extending back over said fixed portion (51);
a face sheet (40) disposed over said inner side (14) and clamped between said fixed and clamping portions (51, 52); and
at least one lighting unit (60) connected to said power supply and disposed at said inner side (14) to emit light to said face sheet (40).

2. The illuminating folder as claimed in Claim 1, further comprising a magnet (20) disposed at said inner side (14) and disposed between said inner side (14) and said fixed portion (51), and a magnetically attractive element ((53) disposed in said clamping portion (52) and attracted magnetically by said magnet (20) so that said clamping portion (52) is positioned to said fixed portion (51).

3. The illuminating folder as claimed in Claim 2, wherein said lighting unit (60) is mounted on said clamping portion (52).

4. The illuminating folder as claimed in Claim 3, wherein said clamping portion (52) has an envelope part (521) enclosing said magnetically attractive element (53) and having a hole (522), said lighting unit (60) being disposed on said magnetically attractive element (53) and exposed from said hole (522) to emit light.

5. The illuminating folder as claimed in Claim 3, wherein said inner side (14) is recessed to form a recessed surface region (114), and a cavity (113), said cavity (113) being formed in said recess surface region (114) and receiving said magnet (20), said fixed portion (51) of said clamp unit (50) being received in said recessed surface region (114) and covering said cavity (113).

6. The illuminating folder as claimed in Claim 5, wherein said clamp unit (50) and said lighting unit (60) are disposed on one of said first and second panels (11, 12) at said inner side (14).

7. The illuminating folder as claimed in Claim 3, wherein a pair of said clamp units (50) are disposed respectively on said first and second panels (11, 12) at said inner side (14), and a pair of said lighting units (60) are mounted respectively on said clamp units (50).

8. The illuminating folder as claimed in Claim 6, wherein said recessed surface region (114) extends from said spine (13) to one edge of said one of said first and second panels, said cavity (113) being formed in proximity to said one edge within said recessed surface region (114), said power supply including a battery case (70)attached to an outer side of said spine (13) and receiving a battery unit (80), and a conductor unit (30) connected electrically to said battery unit )80) and said lighting unit (60) and extending in said recessed surface region (114) fromsaidspine (13) tosaidclamping portion (52).

9. The illuminating folder as claimed in Claim 8, wherein said battery case (70) has a base casing (71), a cover (72), and a battery chamber (74) defined by said base casing (71) and said cover (72), said base casing (71) being fixed to said spine (13), said cover (72) being connected detachably to said base casing (71).

10. The illuminating folder as claimed in Claim 9, wherein said base casing (71) has first and second portions (711, 712), said cover (72) having a stationary portion (721) covering and interlocking with said first portion (711), and a movable portion (722) openably covering said second portion (712).
